# FASCICULE DE BREVET EUROPEEN

(11) **EP 2 936 782 B1**
(45) Date de publication et mention de la délivrance du brevet: **05.02.2020**
(21) Numéro de dépôt: 13818311.6
(22) Date de dépôt: 16.12.2013
(51) Int. Cl.: H04L 29/06, G06F 9/451, G06F 9/455

(54) **PROCÉDÉ DE TRAITEMENT DE REQUÊTES D'ACCÈS ET NAVIGATEUR WEB**
VERFAHREN ZUR ZUGANGSVERARBEITUNG UND WEB BROWSER
METHOD FOR TREATMENT OF ACCESS REQUESTS, AND WEB BROWSER

(30) Priorité: 20.12.2012 FR 1262464
(43) Date de publication de la demande: 28.10.2015
(73) Titulaire: Orange, 75015 Paris (FR)
(72) Inventeur: HE, Ruan, 92130 Issy Les Moulineaux (FR); CHAWKI, Jamil, F-22300 Lannion (FR)
(74) Mandataire: Cabinet Beau de Loménie
(86) Numéro de dépôt international: PCT/FR2013/053099
(87) Numéro de publication internationale: WO 2014/096660

(56) Documents cités:
- US-A1- 2004 061 713
- US-A1- 2008 301 770
- US-A1- 2011 083 117
- US-A1- 2012 317 185

## Description

### Arrière-plan de l'invention

L'invention se rapporte au domaine général des télécommunications.

Elle concerne plus particulièrement le domaine des techniques de virtualisation informatique, telles que les techniques qui permettent de créer un environnement de travail virtuel accessible via un poste de travail d'un utilisateur.

De façon connue, la virtualisation informatique consiste à installer et/ou à faire fonctionner sur un ou plusieurs serveurs distants, un système d'exploitation ou une application, et à renvoyer une image ou une représentation virtuelle de ce système d'exploitation ou de cette application à l'utilisateur sur son terminal (ex. sur son poste de travail), cette image étant reliée au(x) serveur(s) distant(s) hébergeant le système d'exploitation ou l'application. La virtualisation informatique s'appuie donc sur un découplage entre matériel et logiciel, totalement transparent pour l'utilisateur.

Elle présente de nombreux avantages pour les entreprises, notamment en termes de maintenance et d'administration de leurs parcs informatiques. Par ailleurs, elles permettent de gérer aisément la mobilité des utilisateurs : un utilisateur n'est plus en effet dépendant de son poste de travail physique mais peut se connecter à son poste de travail depuis différents terminaux physiques.

Différentes solutions de virtualisation informatique existent dans l'état actuel de la technique, et sont proposées par les fournisseurs de services de virtualisation via des plateformes de virtualisation (ex. serveur).

La solution VDI (pour « Virtual Desktop Infrastructure » en anglais ou Infrastructure de bureau virtuel) propose par exemple d'intégrer la notion de virtualisation informatique dans l'environnement de travail des utilisateurs. Elle consiste à faire fonctionner le système d'exploitation de chaque poste de travail d'utilisateur sur un unique serveur d'hébergement central, et à faire dialoguer chaque système d'exploitation avec le poste de travail auquel il est associé via un protocole de déport de l'affichage, qui s'appuie sur un protocole de diffusion de flux aussi connu sous l'appellation de protocole de streaming. Le poste de travail de l'utilisateur n'embarque alors qu'un client logiciel léger, c'est-à-dire nécessitant des ressources informatiques limitées et peu consommatrices d'énergie.

La solution VDI s'appuie avantageusement sur une architecture relativement simple et offre une grande capacité de personnalisation de l'environnement de travail de l'utilisateur.

Toutefois, le protocole de streaming mis en œuvre entre le serveur d'hébergement central et les postes de travail requiert d'importantes ressources en termes de bande passante, et une connectivité stable. En cas de faiblesse de la bande passante disponible, des difficultés d'affichage de certains flux sur les postes de travail peuvent être rencontrées.

Par ailleurs, la mise à jour des applications embarquées dans les systèmes d'exploitation via cette solution peut s'avérer parfois difficile à gérer.

Une alternative à la solution VDI est la solution de virtualisation SBC (pour « Server-Based Computing » en anglais), qui propose la virtualisation centralisée d'applications. Cette solution consiste à faire fonctionner des applications à distance sur des serveurs, et à renvoyer leur image sur le terminal de l'utilisateur via un protocole de diffusion de flux vidéo. Seules les applications sont virtualisées selon la solution SBC (pas les systèmes d'exploitation).

Cette solution permet de gérer aisément de bout en bout les applications, et notamment leur installation/désinstallation et leur maintenance.

Toutefois, comme la solution VDI, elle requiert d'importantes ressources en termes de bande passante. Par ailleurs, des incompatibilités peuvent être rencontrées avec certaines applications du fait de leur exécution sur un serveur distant plutôt qu'au sein du système d'exploitation du poste de travail de l'utilisateur.

Une autre solution proposée dans l'état de la technique consiste en la virtualisation d'applications et/ou de systèmes d'exploitation basée sur une interface web. Selon cette solution, un serveur web offre des services applicatifs (i.e. de contenus) hébergés par différents serveurs et fournit ces services sous la forme d'une page web à l'utilisateur reconstituant ainsi un bureau virtuel. Chaque opération effectuée par l'utilisateur sur la page web est renvoyée vers le serveur web pour réalisation. Cette solution s'appuie généralement sur le langage HTML (HyperText Markup Langage) ou l'une de ses révisions telle que la révision HTML5.

Elle présente l'avantage de consommer peu de ressources du fait de l'utilisation de pages web. Toutefois, cette solution ne dispose pas d'une capacité de personnalisation très importante.

Ainsi, en fonction du contexte dans lequel se trouve l'utilisateur et de ses besoins en termes d'environnement virtuel, il peut s'avérer judicieux d'envisager l'une ou l'autre de ces solutions de virtualisation. Toutefois, il n'existe pas aujourd'hui de système permettant d'intégrer des solutions de virtualisation distinctes comme par exemple les solutions VDI, SBC ou de virtualisation basée sur une interface web

Le document US-2008/301770 décrit un système et méthode pour la gestion de machines virtuelles et la configuration de terminaux clients.

### Objet et résumé de l'invention

L'invention permet de pallier notamment à cet inconvénient en proposant une solution de virtualisation informatique s'appuyant sur une architecture reposant sur trois principaux acteurs, à savoir :
- un navigateur web installé sur le terminal de l'utilisateur ;
- une pluralité de plateformes de virtualisation offrant des services de virtualisation de systèmes d'exploitation, d'environnement de travail ou d'applications, s'appuyant sur des technologies diverses, telles que notamment sur les technologies précitées de type VDI, SBC et/ou basées sur une interface web ; et
- une passerelle de virtualisation, réalisant l'interface entre le terminal, et plus spécifiquement son navigateur, et les plateformes de virtualisation, et qui permet la négociation, l'établissement et le maintien de sessions de communication entre le terminal et ces différentes plateformes de virtualisation, de sorte à créer un environnement informatique virtuel personnalisé pour l'utilisateur du terminal.

Conformément à l'invention, la passerelle de virtualisation, sur réception d'une requête d'accès à un service de virtualisation offert par l'une des plateformes de virtualisation en provenance du navigateur du terminal, génère une application système comprenant un module de connexion à cette plateforme destiné à permettre au terminal de négocier et maintenir une session de communication avec la plateforme afin d'accéder au service de virtualisation offert par cette plateforme. Cette application système est générée à partir d'informations de connexion transmises par la plateforme de virtualisation relatives au service de virtualisation requis par le terminal (ex. URL (Uniform Resource Locator), port(s) sur lesquels se connecter, mécanismes d'authentification supportés, protocole d'initiation de session utilisé, etc.). Elle est préférentiellement générée en langage JavaScript® de sorte à être générique et à pouvoir être exécutée par la majorité voire la totalité des navigateurs web pouvant être installés sur les terminaux.

On entend au sens de l'invention par application système, une application incluant des paramètres ou des scripts de connexion à la plateforme déterminés à partir des informations de connexion transmises par la plateforme à la passerelle. Cette application système est adaptée au service de virtualisation requis par le terminal dans le sens où elle prend en compte les spécificités de ce service en termes de connexion (ex. protocole de session d'initiation utilisé pour se connecter sur le service de virtualisation, méthode d'authentification, URL et ports de connexion, etc.). De tels paramètres ou scripts sont nécessaires pour permettre au terminal de se connecter à la plateforme, autrement dit il s'agit d'un préalable à la négociation et à l'établissement d'une session de communication avec la plateforme en vue d'accéder au service de virtualisation offert par celle-ci.

Il convient de noter qu'une telle application système est active, c'est-à-dire qu'elle s'exécute sur le navigateur pour initier la connexion avec la plateforme associée. Elle s'oppose en ce sens à une application conventionnelle passive dite de contenu (aussi connue sous le nom de « cookie »), qui ne contient pas de tels paramètres de connexion et qui ne lance aucun processus dans le navigateur, mais contient uniquement des éléments de contenu en relation avec le service invoqué.

L'application système générée par la passerelle contient également préférentiellement une pile de protocoles de communication (incluant par exemple des algorithmes de chiffrement, des codecs, l'interface graphique utilisée pour déporter l'environnement virtuel, le protocole de transport des flux de communication comme VDI ou SBC échangés entre le terminal et la plateforme, etc.) destinés à être utilisés par le terminal lors de ses communications avec la plateforme. Cette pile de protocoles est adaptée à la fois aux caractéristiques techniques du terminal et au service demandé.

L'application système est avantageusement transmise par la passerelle de virtualisation au navigateur web du terminal, et non à son système d'exploitation, de sorte à bénéficier des avantages décrits précédemment associés aux solutions de virtualisation basées sur une interface web (ressources requises limitées, notamment en termes de bande passante, client léger au niveau du terminal, simplicité d'exécution, etc.). Le terminal peut ainsi accéder à différents services de virtualisation uniquement via son navigateur web, ce qui présente l'avantage d'offrir une solution indépendante du système d'exploitation du terminal.

L'invention propose par conséquent une architecture générique et relativement flexible permettant à un terminal de bénéficier d'une pluralité de solutions de virtualisation. Le terminal peut ainsi établir aisément une session de communication avec n'importe quel type de plateforme de virtualisation et accéder au service offert par celle-ci, indépendamment de son système d'exploitation.

Pour supporter cette architecture, l'invention vise, selon un premier aspect, un procédé de traitement de requêtes d'accès à des services de virtualisation informatique, mis en œuvre par une passerelle de virtualisation, cette passerelle maintenant une base de données contenant, pour chaque plateforme d'une pluralité de plateformes de virtualisation, au moins un service de virtualisation informatique offert par cette plateforme et des informations de connexion permettant d'accéder audit au moins un service par l'intermédiaire de cette plateforme. Conformément à l'invention, ce procédé de traitement comprend :
- une étape de réception d'une requête d'accès d'un terminal à un service de virtualisation informatique offert par une plateforme de virtualisation, cette requête d'accès ayant été émise par un navigateur web installé sur le terminal ;
- si le service requis par le terminal est contenu dans la base maintenue par la passerelle, une étape de génération, à partir des informations de connexion associées dans la base à ce service, d'une application système adaptée au service, cette application système comprenant un module de connexion à la plateforme de virtualisation offrant le service, apte à permettre au terminal de négocier l'établissement et le maintien d'une session de communication avec la plateforme ; et
- une étape d'envoi de l'application système générée au navigateur web installé sur le terminal.

Corrélativement, l'invention vise aussi une passerelle de virtualisation comprenant :
- une base de données contenant, pour chaque plateforme d'une pluralité de plateformes de virtualisation, au moins un service de virtualisation informatique offert par cette plateforme et des informations de connexion permettant d'accéder audit au moins un service par l'intermédiaire de ladite plateforme ;
- un module de réception d'une requête d'accès d'un terminal à un service de virtualisation informatique offert par une plateforme de virtualisation, cette requête ayant été émise par un navigateur web installé sur le terminal ;
- un module de vérification, activé sur réception de la requête d'accès, apte à vérifier si le service de virtualisation requis par le terminal est contenu dans la base de données ;
- un module de génération, activé le cas échéant, d'une application système adaptée au service de virtualisation requis, à partir des informations de connexion associées dans la base audit service, cette application système comprenant un module de connexion à la plateforme de virtualisation offrant ledit service, apte à permettre au terminal de négocier l'établissement et le maintien d'une session de communication avec ladite plateforme ; et
- un module d'envoi de l'application système générée par le module de génération au navigateur web installé sur le terminal.

La base de données maintenue par la passerelle comprend par exemple des informations de connexion (ex. paramètres de connexion, URL (Uniform Resource Locator) des plateformes, ports de connexion, etc.) relatives à au moins deux plateformes de virtualisation parmi :
- une plateforme de virtualisation de type VDI ;
- une plateforme de virtualisation d'applications centralisée de type SBC ; et
- une plateforme de virtualisation d'applications et/ou de systèmes d'exploitation utilisant une interface web.

La solution proposée par l'invention est avantageusement très flexible, et supporte aisément l'ajout et/ou la suppression de plateformes de virtualisation via le maintien à jour de la base de données par la passerelle de virtualisation.

A cet effet, dans un mode particulier de réalisation, le procédé de traitement comprend en outre :
- au moins une étape de réception d'un message en provenance d'une plateforme de virtualisation identifiant au moins un service de virtualisation informatique offert par cette plateforme et contenant des informations de connexion pour accéder audit au moins un service par l'intermédiaire de cette plateforme de virtualisation ; et
- une étape de mise à jour de la base avec le service identifié et les informations de connexion contenues dans le message reçu.

Ces messages peuvent être envoyés de manière asynchrone par les plateformes de virtualisation, en fonction notamment des changements opérés par ces plateformes de virtualisation affectant les services de virtualisation qu'elles offrent, et/ou de changements concernant les informations de connexion communiquées à la passerelle de virtualisation.

En variante, ils peuvent être envoyés de manière périodique à la passerelle de virtualisation, ou sur requête de celle-ci.

L'invention permet une configuration dynamique du terminal, via l'envoi d'une application système adaptée au service de virtualisation requis par celui-ci. Cette configuration permet au terminal d'initier une session de communication via son navigateur web avec la plateforme de virtualisation offrant le service auquel souhaite accéder le terminal. Cette configuration dynamique permet de s'adapter aux changements susceptibles d'affecter les services de virtualisation offerts par les plateformes et les informations de connexion requises pour accéder à ces services.

Dans un mode particulier de réalisation de l'invention, l'application système générée par la passerelle comprend en outre une pile de protocoles de communication adaptés au terminal et/ou au service, et destinés à être mis en œuvre lors d'une session de communication entre le terminal et la plateforme de virtualisation.

Ce mode de réalisation permet de s'adapter notamment aux caractéristiques techniques du terminal et plus particulièrement de son navigateur web. Ainsi notamment, l'application système pourra être différente selon si le terminal est un poste de travail fixe ou un téléphone intelligent aussi connu sous le nom de « smartphone » en anglais.

De façon similaire, on pourra envisager d'inclure dans cette pile de protocoles un codec pour les flux de communication différent selon si le service de virtualisation est un service de type VDI ou SBC ou encore basé sur une interface web.

L'invention permet donc de personnaliser davantage l'environnement informatique virtuel offert à l'utilisateur du terminal.

Dans un autre mode de réalisation, l'application système comprend en outre des modules de connexion aux autres plateformes de la pluralité de plateformes de virtualisation aptes à permettre au terminal de négocier l'établissement et le maintien, le cas échéant, de sessions de communication avec ces autres plateformes.

De cette sorte, l'environnement informatique virtuel proposé à l'utilisateur du terminal est complet dès son établissement, et regroupe les modules de connexion aux différentes plateformes de virtualisation que l'utilisateur est susceptible de solliciter pour la virtualisation de son environnement.

La passerelle de virtualisation peut alors se contenter de mettre à jour ces modules de connexion, si cela est nécessaire (autrement dit si un changement affectant ces modules a été signalé à la passerelle), lorsqu'elle reçoit une nouvelle requête du navigateur du terminal pour accéder à l'un des services de virtualisation offerts par les plateformes.

Comme mentionné précédemment, l'architecture proposée par l'invention pour supporter divers services de virtualisation informatiques offerts par des plateformes distinctes, s'appuie également sur le navigateur destiné à être installé sur le terminal de l'utilisateur, et qui est apte à exécuter notamment l'application système transmise par la passerelle, ainsi que sur le terminal de l'utilisateur sur lequel est installé ce navigateur.

Ainsi, selon un deuxième aspect, l'invention vise un procédé d'initiation, par un navigateur web installé sur un terminal, d'un accès par ce terminal à un service de virtualisation informatique offert par une plateforme de virtualisation, ledit procédé comprenant :
- une étape d'envoi par le navigateur web, à une passerelle de virtualisation, d'une requête d'accès au service de virtualisation informatique ;
- une étape de réception, par le navigateur web, en provenance de la passerelle de virtualisation, d'une application système adaptée au service de virtualisation informatique requis, et comprenant un module de connexion à la plateforme de virtualisation offrant ce service, apte à permettre au terminal de négocier l'établissement et le maintien d'une session de communication avec la plateforme ; et
- une étape d'exécution par le navigateur web de l'application système reçue, comprenant une négociation de l'établissement et du maintien d'une session de communication avec la plateforme de virtualisation afin d'accéder au service de virtualisation à l'aide du module de connexion.

Corrélativement, l'invention vise aussi un navigateur web destiné à être installé sur un terminal, ce navigateur web comprenant :
- un module d'envoi apte à envoyer à une passerelle de virtualisation une requête d'accès à un service de virtualisation informatique offert par une plateforme de virtualisation ;
- un module de réception apte à recevoir de la passerelle de virtualisation, une application système adaptée au terminal et au service de virtualisation informatique requis, et comprenant un module de connexion à la plateforme de virtualisation offrant le service, apte à permettre au terminal de négocier l'établissement et le maintien d'une session de communication avec cette plateforme;
- un module d'exécution apte à exécuter l'application système reçue et à négocier l'établissement et le maintien d'une session de communication avec la plateforme afin d'accéder au service de virtualisation en utilisant le module de connexion contenue dans l'application système.

Comme mentionné précédemment, un utilisateur peut ainsi avantageusement accéder à une pluralité de services de virtualisation moyennant l'installation sur son terminal d'un navigateur web selon l'invention. Le client permettant à l'utilisateur d'accéder à un environnement virtuel via son terminal est donc relativement léger, ce qui permet de limiter la complexité au niveau du terminal nécessaire à l'implémentation de l'invention.

Par ailleurs, ce navigateur web permet d'offrir une solution générique, qui ne dépend pas du système d'exploitation supporté par le terminal.

Grâce à l'invention, l'environnement informatique virtuel dont bénéficie l'utilisateur du terminal peut s'appuyer sur des techniques de virtualisation distinctes (ex. SBC, VDI, basées sur une interface web, etc.). Différentes sessions de communication peuvent donc coexister simultanément entre le terminal et les différentes plateformes de virtualisation.

Pour s'accommoder de cette situation, l'invention propose, selon un troisième aspect, un procédé de gestion (i.e. de maintien) d'un environnement informatique virtuel, ce procédé étant destiné à être mis en œuvre par un navigateur web installé sur un terminal et comprenant :
- une étape d'établissement, dans cet environnement informatique virtuel, d'au moins une session de communication avec au moins une plateforme de virtualisation offrant un service de virtualisation informatique, au moins une dite session de communication étant établie suite à la mise en œuvre par le navigateur web d'un procédé d'initiation conforme à l'invention ; et
- une étape de maintien de l'environnement informatique virtuel utilisant :
   ∘ une machine à états définissant différents états possibles pour l'environnement informatique virtuel (ex. initialisation, synchronisation avec les plateformes de virtualisation, service de virtualisation en cours, etc.) ; et
   ∘ pour chaque plateforme de virtualisation avec laquelle une session de communication est établie dans l'environnement informatique virtuel lors de l'étape d'établissement, une machine à états définissant différents états possibles pour cette session de communication (initialisation de la session, invocation du service, session hors ligne, réinitialisation de la session, etc.).

Corrélativement, dans un mode particulier de réalisation de l'invention, le navigateur web équipant le terminal comprend en outre un module de gestion d'un environnement informatique virtuel dans lequel au moins une session de communication avec au moins une plateforme de virtualisation offrant un service de virtualisation informatique est établie suite à une négociation avec cette plateforme par le module d'exécution, ce module de gestion étant apte à utiliser, pour maintenir cet environnement informatique virtuel :
- une machine à états définissant différents états possibles pour l'environnement informatique virtuel (ex. initialisation, synchronisation avec les plateformes de virtualisation, service de virtualisation en cours, etc.) ; et
- pour chaque plateforme de virtualisation avec laquelle une session de communication est établie dans l'environnement informatique virtuel lors de l'étape d'établissement, une machine à états définissant différents états possibles pour cette session de communication (initialisation de la session, invocation du service, session hors ligne, réinitialisation de la session, etc.).

Autrement dit, le procédé de gestion selon l'invention s'appuie, pour le maintien et le contrôle de l'environnement virtuel offert à l'utilisateur du terminal, sur des machines à états à deux niveaux, et plus précisément :
- sur une machine à états dite globale, qui définit les différents états que peut prendre l'environnement virtuel dans sa globalité, et
- sur une pluralité de machines à états relatives à chaque session de communication établie avec une plateforme de virtualisation, et qui définissent les différents états de chacune de ces sessions.

Ce contrôle à deux niveaux permet, moyennant une complexité raisonnable, de garantir à tout moment d'une part, l'accessibilité par l'utilisateur à un environnement informatique virtuel, et d'autre part, la compatibilité entre les différentes solutions de virtualisation coexistant dans cet environnement virtuel et proposées à l'utilisateur.

L'invention vise également un terminal sur lequel est installé un navigateur web selon l'invention.

Dans un mode particulier de réalisation, les différentes étapes du procédé de traitement, du procédé d'initiation et/ou du procédé de gestion sont déterminées par des instructions de programmes d'ordinateurs.

En conséquence, l'invention vise aussi un programme d'ordinateur sur un support d'informations, ce programme étant susceptible d'être mis en œuvre dans une passerelle de virtualisation ou plus généralement dans un ordinateur, ce programme comportant des instructions adaptées à la mise en œuvre des étapes d'un procédé de traitement tel que décrit ci-dessus.

L'invention vise également un programme d'ordinateur sur un support d'informations, ce programme étant susceptible d'être mis en œuvre dans un navigateur web, dans un terminal ou plus généralement dans un ordinateur, ce programme comportant des instructions adaptées à la mise en œuvre des étapes d'un procédé d'initiation tel que décrit ci-dessus.

L'invention vise aussi un programme d'ordinateur sur un support d'informations, ce programme étant susceptible d'être mis en œuvre dans un navigateur web, dans un terminal ou plus généralement dans un ordinateur, ce programme comportant des instructions adaptées à la mise en œuvre des étapes d'un procédé de gestion d'un environnement virtuel tel que décrit ci-dessus.

Ces programmes peuvent utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un quatrième aspect, l'invention vise également un système informatique comprenant :
- une pluralité de plateformes de virtualisation offrant des services de virtualisation informatique ;
- un terminal sur lequel est installé un navigateur web selon l'invention, apte à envoyer une requête d'accès à un dit service de virtualisation informatique offert par une dite plateforme de virtualisation ; et
- une passerelle de virtualisation selon l'invention, apte à traiter cette requête d'accès.

La pluralité de plateformes de virtualisation comprend par exemple au moins deux plateformes parmi :
- une plateforme de virtualisation de type VDI ;
- une plateforme de virtualisation d'applications de type SBC ; et
- une plateforme de virtualisation d'applications et/ou de systèmes d'exploitation utilisant une interface web.

Dans un mode particulier de réalisation, au moins une dite plateforme de virtualisation est apte à envoyer des messages asynchrones à la passerelle de virtualisation l'informant des services de virtualisation informatique qu'elle offre et contenant des informations de connexion associées à ces services de virtualisation.

De cette sorte, la passerelle de virtualisation peut mettre à jour aisément la base de données de façon à disposer d'informations de connexion adaptées lorsque le terminal requiert l'accès à un service de virtualisation. Ceci facilite l'accès aux services et apporte une grande flexibilité : on peut aisément ajouter, voire supprimer des services de virtualisation dans la base de données maintenue par la passerelle.

Selon un cinquième aspect, l'invention vise une base de données, maintenue par une passerelle de virtualisation contenant, pour chaque plateforme d'une pluralité de plateformes de virtualisation, au moins un service de virtualisation informatique offert par cette plateforme et des informations de connexion permettant d'accéder audit au moins un service par l'intermédiaire de cette plateforme.

On peut également envisager, dans d'autres modes de réalisation, que le procédé de traitement, le procédé d'initiation, le procédé de gestion, la passerelle de virtualisation, le navigateur web, le terminal, le système et la base de données selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente un système informatique, une passerelle de virtualisation et un terminal conformes à l'invention dans un mode particulier de réalisation ;
- les figures 2A, 2B et 2C illustrent respectivement des architectures fonctionnelles de plateformes de virtualisation susceptibles d'offrir des services de virtualisation au terminal de la figure 1 ;
- les figures 3A et 3B illustrent respectivement les architectures matérielles du terminal et de la passerelle de la figure 1 ;
- la figure 4 représente un exemple de base de données maintenue par la passerelle de virtualisation de la figure 1 ;
- la figure 5 représente, sous forme de diagramme, les principales étapes d'un procédé de traitement et d'un procédé d'initiation tels que mis en œuvre respectivement par la passerelle et par le terminal de la figure 1, dans un mode particulier de réalisation ; et
- la figure 6 représente, sous forme d'ordinogramme, les principales étapes d'un procédé de gestion d'un environnement virtuel mis en œuvre par le terminal de la figure 1, dans un mode particulier de réalisation.

### Description détaillée de l'invention

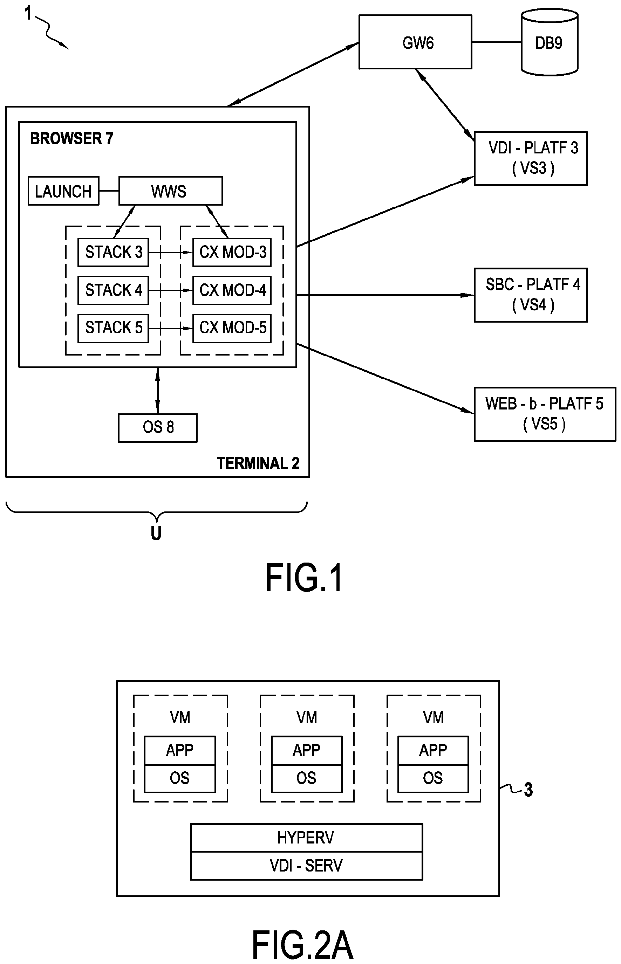

La **figure 1** décrit, dans son environnement, un système informatique 1 conforme à l'invention, dans un mode particulier de réalisation.

Conformément à l'invention, le système 1 offre la possibilité à un utilisateur U d'un terminal 2 de bénéficier d'un environnement informatique virtuel VE (tel un environnement de bureau virtuel), dans lequel une ou plusieurs sessions de communication peuvent être établies avec des plateformes de virtualisation implémentant des solutions de virtualisation distinctes.

Dans l'exemple illustré à la figure 1, on considère trois plateformes de virtualisation 3, 4 et 5 distinctes, implémentant respectivement une solution de virtualisation de type VDI, une solution de virtualisation centralisée d'applications de type SBC, et une solution de virtualisation d'applications et/ou de systèmes d'exploitation utilisant sur une interface web. Chacune de ces plateformes offre un service de virtualisation (i.e. un service VS3, un service VS4 et un service VS5 respectivement), mettant en œuvre la solution de virtualisation implémentée par la plateforme. Elles peuvent être gérées par des opérateurs distincts ou par un même opérateur.

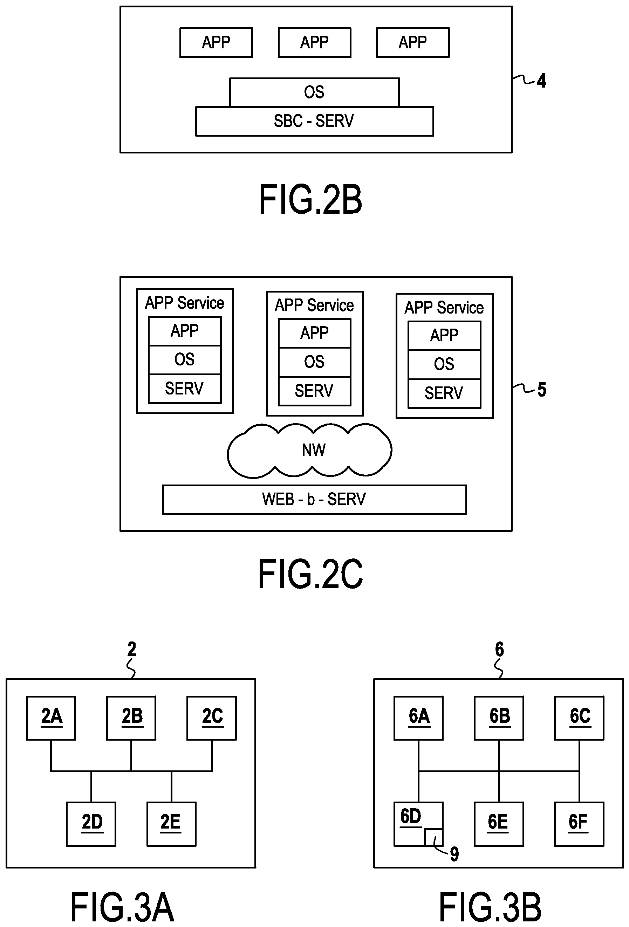

Les architectures fonctionnelles des plateformes de virtualisation 3, 4 et 5 sont illustrées schématiquement aux **figures 2A****,** **2B et 2C** respectivement. Ces architectures sont connues de l'homme du métier et ne sont pas décrites en détail ici.

Ainsi, en référence à la figure 2A, la plateforme de virtualisation 3, qui propose le service de virtualisation VS3 et repose sur une solution de type VDI, s'appuie sur un hyperviseur HYPERV basé sur un serveur VDI-SERV, et sur une ou plusieurs machines virtuelles VM exécutant des systèmes d'exploitation.

En référence à la figure 2B, la plateforme de virtualisation 4, qui propose le service de virtualisation d'applications VS4 et repose sur une solution centralisée de type SBC, s'appuie sur un système d'exploitation OS implémenté sur un serveur SBC-SERV, et sur un ou plusieurs serveurs d'application APP.

En référence à la figure 2C, la plateforme de virtualisation 5, qui propose le service de virtualisation d'applications et/ou de systèmes d'exploitation VS5 et repose sur une solution utilisant une interface web, s'appuie sur un serveur WEB-b-SERV qui interagit via un réseau NW avec un ou plusieurs services APP-SERVICE supportés par des serveurs SERV.

Bien entendu, aucune limitation n'est attachée au nombre de plateformes de virtualisation considérées pour la mise en œuvre de l'invention ni aux solutions de virtualisation spécifiques supportées par ces plateformes, l'invention s'appliquant également à un nombre différent de plateformes et à d'autres solutions de virtualisation. On peut par ailleurs envisager d'appliquer l'invention dans un contexte où plusieurs plateformes de virtualisation parmi la pluralité de plateformes considérées supportent la même solution de virtualisation mais sont gérées par des opérateurs différents.

Conformément à l'invention, le système 1 repose sur une architecture tripartite pour l'établissement et le maintien de l'environnement virtuel VE requis par l'utilisateur U. Plus précisément, il comprend :
- le terminal 2 de l'utilisateur U ;
- les plateformes de virtualisation 3, 4 et 5 ; et
- une passerelle de virtualisation 6 (ou serveur de virtualisation), conforme à l'invention, réalisant l'interface entre le terminal 2 et les plateformes de virtualisation 3, 4 et 5 pour l'établissement de sessions de communication entre ces entités dans le contexte de l'environnement virtuel VE.

Le terminal 2 de l'utilisateur U est un terminal conforme à l'invention. Il peut s'agir d'un terminal quelconque, tel que par exemple un ordinateur fixe ou portable, un téléphone intelligent ou « smartphone », etc.

Un navigateur web 7 conforme à l'invention est installé sur ce terminal, utilisant le langage HTML pour l'affichage des pages web. Le terminal 2 est en outre équipé d'un système d'exploitation 8.

Dans le mode de réalisation décrit ici, le navigateur web 7 supporte la version 5 d'HTML (HTML5), telle que définie par le consortium de standardisation W3C (World Wide Web Consortium). De plus amples détails sur cette version sont disponibles sur le site internet du W3C (www.w3C.org).

Le navigateur 7 supporte par ailleurs le langage JavaScript® et est capable à ce titre d'exécuter des applications écrites dans ce langage, et notamment des applications système JavaScript® actives, c'est-à-dire qui s'exécutent sur le navigateur web 7 pour initier une connexion avec une plateforme de services déterminée. Autrement dit, le navigateur web 7 fournit un environnement permettant d'exécuter ces applications système JavaScript®.

Dans le mode de réalisation décrit ici, le terminal 2 dispose de l'architecture matérielle d'un ordinateur, illustrée schématiquement à la **figure 3A****.**

Il comporte notamment un processeur 2A, une mémoire morte 2B, une mémoire vive 2C, une mémoire non volatile 2D et des moyens de communication 2E avec notamment la passerelle de virtualisation 6 et avec les plateformes de virtualisation 3, 4, 5. Ces moyens de communication 2E intègrent par exemple une carte réseau, connue en soi et non détaillée ici.

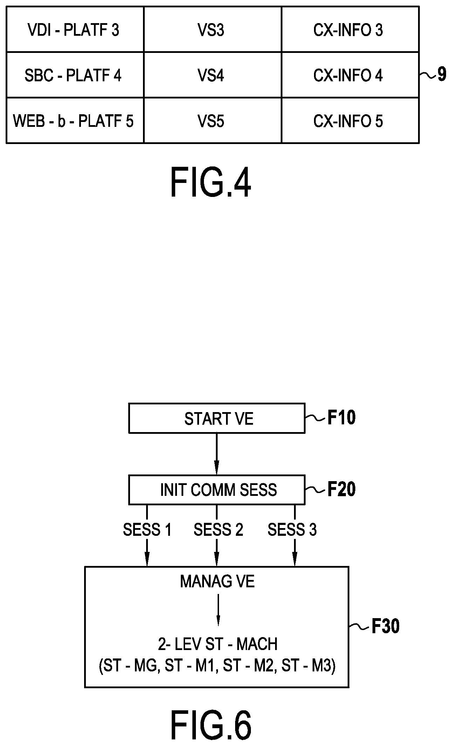

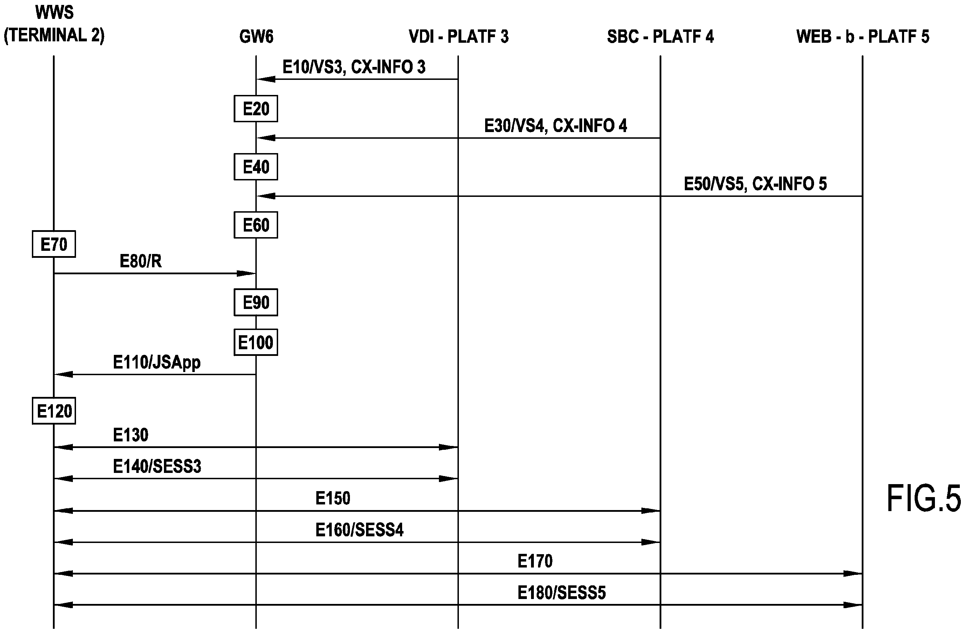

La mémoire morte 2B du terminal constitue un support d'enregistrement conforme à l'invention, lisible par le processeur 2A et sur lequel sont enregistrés :
- un programme d'ordinateur conforme à l'invention, comportant des instructions pour l'exécution des étapes d'un procédé d'initiation conforme à l'invention ; et
- un programme d'ordinateur comportant des instructions pour l'exécution des étapes d'un procédé de gestion conforme à l'invention,
les étapes des procédés d'initiation et de gestion étant décrites ultérieurement en référence aux figures 5 et 6, dans un mode particulier de réalisation.

Ces programmes d'ordinateur définissent, de façon équivalente, des modules fonctionnels du navigateur web 7, et plus spécifiquement un module de gestion WWS de l'environnement virtuel VE qui comprend ici notamment un module d'envoi de requêtes d'accès aux services de virtualisation offerts par les plateformes 3, 4 et 5, un module de réception d'une ou de plusieurs applications système permettant au terminal 2 d'initier et de maintenir une session avec les plateformes 3, 4 et 5, et un module d'exécution des applications système, et qui est apte à gérer l'établissement et le maintien de sessions de communication avec les plateformes de services 3, 4 et 5, ainsi qu'avec la passerelle 6.

Ces modules sont des modules JavaScript®, participant à la mise en œuvre de l'invention. Leurs fonctions seront décrites ultérieurement plus en détail en référence aux étapes des procédés d'initiation et de gestion, à l'appui des figures 5 et 6.

Comme mentionné précédemment, la passerelle de virtualisation 6 réalisant l'interface entre le terminal 2 et les plateformes de virtualisation 3, 4 et 5, est conforme à l'invention. Dans le mode de réalisation décrit ici, cette passerelle 6 est un serveur web disposant de l'architecture matérielle d'un ordinateur, telle qu'illustrée à la **figure 3B****.**

Plus précisément, la passerelle 6 comporte notamment un processeur 6A, une mémoire morte 6B, une mémoire vive 6C, une mémoire non volatile 6D et des moyens de communication 6E avec notamment le terminal 2 et les plateformes de virtualisation 3, 4, 5. Ces moyens de communication 6E intègrent par exemple une carte réseau, connue en soi et non détaillée ici.

Il convient de noter que dans le mode de réalisation décrit ici, la passerelle 6 supporte la version 5 du langage HTML (HTML5) ainsi que le langage JavaScript®, afin de pouvoir communiquer avec le terminal 2 et notamment le navigateur 7 de ce terminal. Autrement dit, les modules d'envoi, de réception et de génération de la plateforme 6 sont aptes à utiliser ces langages dans leurs interactions avec le navigateur 7 du terminal 2.

La mémoire morte 6B de la passerelle 6 constitue un support d'enregistrement conforme à l'invention, lisible par le processeur 6A et sur lequel est enregistré un programme d'ordinateur conforme à l'invention, comportant des instructions pour l'exécution des étapes d'un procédé de traitement conforme à l'invention, les étapes de ce procédé de traitement étant décrites ultérieurement en référence à la figure 5, dans un mode particulier de réalisation.

Ce programme d'ordinateur définit de façon équivalente des modules fonctionnels de la passerelle 6, tels que notamment un module de réception de requêtes d'accès aux services VS3, VS4, VS5, en provenance du navigateur 7 du terminal 2 (i.e. requêtes HTTP), un module de vérification de la compatibilité du service de virtualisation requis par le terminal 2 avec les services offerts par les plateformes 3, 4 et 5, un module de génération d'une ou plusieurs applications systèmes destinés à permettre au terminal 2 de se connecter aux plateformes 3, 4 et 5 pour accéder aux services de virtualisation offerts par ces plateformes, et un module d'envoi de cette ou de ces applications systèmes au navigateur 7 du terminal 2 par l'intermédiaire d'une réponse HTTP. Ces modules sont par exemple ici des modules JavaScript®, participant à la mise en œuvre de l'invention. Leurs fonctions seront décrites ultérieurement plus en détail en référence aux étapes du procédé de traitement illustrées à la figure 5.

Conformément à l'invention, la passerelle 6 maintient une base de données 9, mémorisée ici dans sa mémoire non volatile 6D. Cette base de données 9 contient pour chaque plateforme d'une pluralité de plateformes de virtualisation, au moins un service de virtualisation informatique offert par cette plateforme et des informations de connexion permettant d'accéder à ce service par l'intermédiaire de cette plateforme. Ces informations de connexion contiennent par exemple une URL permettant d'accéder à la plateforme, les ports utilisés pour accéder au service, la désignation du protocole d'initiation de session requis, des mécanismes d'authentification (ex. SAML (Security Assertion Markup Language) ou Token Kerberos), etc. ou toute autre information préalable requise pour se connecter à la plateforme et négocier l'établissement et le maintien d'une session de communication avec celle-ci.

Un exemple de la base de données 9 est illustré à la **figure 4****,** dans le contexte de la figure 1 (i.e. trois plateformes de virtualisation 3, 4, 5 offrant respectivement les services de virtualisation VS3, VS4 et VS5).

Ainsi, selon cet exemple, la base de données 9 identifie les trois plateformes 3, 4, 5 et contient :
- pour la plateforme de virtualisation 3 : le service de virtualisation VS3 et les informations CX-INFO3 de connexion permettant d'accéder au service VS3 via la plateforme 3 ;
- pour la plateforme de virtualisation 4 : le service de virtualisation VS4 et les informations CX-INFO4 de connexion permettant d'accéder au service VS4 via la plateforme 4 ; et
- pour la plateforme de virtualisation 5 : le service de virtualisation VS5 et les informations CX-INFO5 de connexion permettant d'accéder au service VS5 via la plateforme 5.

Dans l'exemple envisagé à la figure 1, on se limite à un service de virtualisation par plateforme. Toutefois cette hypothèse n'est pas limitative et on pourrait envisager d'autres configurations.

La base de données 9 est maintenue à jour par la passerelle 6 sur réception de messages émis par les plateformes de virtualisation 3, 4, et 5. Par l'intermédiaire de ces messages, les plateformes de virtualisation publient (i.e. identifient) les services de virtualisation qu'elles proposent, ainsi que les informations de connexion requises pour accéder à ces services par leur intermédiaire. Elles peuvent par ailleurs informer la passerelle 6 de la disponibilité des serveurs intervenant dans l'offre de ces services de virtualisation.

Ces messages sont envoyés ici de façon asynchrone par les plateformes 3, 4 et 5.

En variante, ils peuvent être envoyés périodiquement ou sur requête de la passerelle.

Sur réception de ces messages, la passerelle 6 met à jour la base de données 9, de sorte à refléter les informations de connexion courantes relatives aux plateformes de virtualisation 3, 4 et 5 et aux services de virtualisation offerts par ces passerelles.

Nous allons maintenant décrire, en référence aux **figures 5** **et** **6****,** les principales étapes du procédé de traitement mis en œuvre par la passerelle 6, et les principales étapes des procédés de maintien et d'initiation mis en œuvre par le terminal 2, dans un mode particulier de réalisation, lors de l'établissement de l'environnement informatique virtuel VE requis par l'utilisateur U du terminal 2.

On suppose en préliminaire que, comme mentionné précédemment, les plateformes 3, 4 et 5 ont de manière asynchrone publié, via l'envoi de messages à la passerelle 6, les services de virtualisation qu'elles offrent ainsi que les informations de connexion requises pour accéder à ces services (étapes E10, E30, E50 de la figure 5).

Sur réception de ces messages, la passerelle 6 met à jour la base de données 9 de sorte à refléter les services courants offerts par les plateformes 3, 4 et 5 ainsi que les informations de connexion correspondantes (étapes E20, E40 et E60 de la figure 5), comme décrit précédemment.

On suppose maintenant que l'utilisateur U requiert l'établissement de l'environnement informatique virtuel VE via son terminal 2, par exemple en lançant une application web LAUNCH idoine installée sur ce dernier (étape F10, figure 6). Une telle application est connue en soi et ne sera pas décrite davantage ici. Le lancement de cette application LAUNCH déclenche l'exécution du module JavaScript® de maintien WWS intégré dans le navigateur 7.

L'application LAUNCH envoie une requête HTTP au module de maintien WWS, identifiant le service de virtualisation sollicité par l'utilisateur U, et choisi parmi une liste prédéterminée de services de virtualisation (incluant par exemple ici les services VS3, VS4 et VS5 offerts par les plateformes 3, 4 et 5).

A titre illustratif, on suppose ici que le service de virtualisation sollicité par l'utilisateur U du terminal 2 est le service VS3 de virtualisation de type VDI offert par la plateforme 3.

Sur réception de cette requête (étape E70 de la figure 5), le navigateur 7, via le module de maintien WWS, établit une session de communication avec la passerelle de virtualisation 6 en émettant à destination de celle-ci une requête R d'accès HTTP au service VS3 offert par la plateforme 3 (étape E80 de la figure 5).

La requête d'accès R est dérivée de la requête reçue par le module de maintien WWS et émise par l'application web lancée par l'utilisateur U. Elle comprend en outre, de façon connue en soi, les caractéristiques techniques du navigateur 7 (capacités, version HTML supportée (HTML5 ici), etc.).

Sur réception de la requête d'accès R, la passerelle 6 de virtualisation vérifie, que le service de virtualisation requis par le terminal 2 est compatible avec les services de virtualisation publiés par les plateformes 3, 4 et 5 (étape E90 de la figure 5).

A cet effet, elle consulte la base de données 9 et vérifie que le service requis par le terminal 2 est bien contenu dans celle-ci.

Si le service requis par le terminal 2 n'est pas contenu dans la base 9, la passerelle 6 rejette la requête d'accès émise par le terminal 2 via son navigateur 7, et l'environnement virtuel VE ne peut être établi.

Dans l'exemple envisagé ici, le service VS3 requis par le terminal 2 est bien inclus dans la base 9.

La passerelle 6 extrait alors de la base de données 9, les informations de connexion CX-INFO3 communiquées par la plateforme 3 pour accéder au service VS3.

Puis elle génère, à partir de ces informations de connexion, une application système JSApp adaptée au terminal 2, et plus particulièrement à son navigateur 7, ainsi qu'au service VS3. Cette application système est, dans le mode de réalisation décrit ici, une application JavaScript® (étape E100 de la figure 5).

En variante d'autres langages peuvent être utilisés pour cette application, comme par exemple le langage ECMAScript (et notamment sa version 5).

Plus spécifiquement, l'application système JSApp comprend un module de connexion CX-MOD3 à la plateforme 3 destiné à permettre au terminal 2, et plus précisément à son navigateur 7, de négocier avec la plateforme 3 l'établissement et le maintien d'une session de communication, et ce, afin de pouvoir accéder au service VS3. Ce module de connexion CX-MOD3 est un module JavaScript®. Il se présente sous la forme d'un ensemble d'interfaces de programmation de type API (Application Programming Interface), autrement dit de fonctions, destinées à permettre une interaction entre le navigateur 7 et la plateforme 3, et intégrant notamment, l'URL de la plateforme 3, la désignation des mécanismes d'authentification requis auprès de cette plateforme, et celle du protocole d'initiation de session mis en œuvre par la plateforme 3, etc. Le module de connexion CX-MOD3 est ainsi apte à gérer l'ensemble de l'établissement de la connexion avec la plateforme 3.

Le module de connexion CX-MOD3 est adapté au service VS3 dans le sens où il intègre les paramètres de connexion à la plateforme 3 (ex. URL, ports, etc.) permettant de négocier l'établissement et le maintien d'une session de communication avec celle-ci en vue d'accéder au service VS3.

Toutefois, il convient de noter qu'à l'exception de ces paramètres de connexion qui sont spécifiques à la plateforme 3 et donc au service VS3, on peut envisager que les autres fonctionnalités implémentées par le module de connexion CX-MOD3 (typiquement liées à la négociation à proprement parler de l'établissement et du maintien d'une session de communication avec la plateforme) soient génériques et indépendantes du service VS3 (autrement dit ces fonctionnalités sont les mêmes pour le module CX-MOD3 de connexion avec la plateforme 3 que pour un module équivalent de connexion avec la plateforme 4 ou avec la plateforme 5). En effet, ce module de connexion n'intègre pas à proprement parler les algorithmes de chiffrement et/ou de codage ou autres nécessaires à l'établissement et au maintien d'une session de communication mais s'emploie à fournir les moyens d'établir une connexion avec la plateforme 3 et de négocier l'établissement et le maintien d'une session de communication.

Un exemple d'un module de connexion CX-MOD3 pouvant être généré par la passerelle 6 et convenant à la mise en œuvre de l'invention est un module identique ou similaire au module PeerConnection JavaScript API spécifié par le standard WebRTC, et qui permet l'envoi et la réception de flux média entre deux entités (navigateurs ou autres) implémentant des protocoles de communication en temps réel.

De plus amples détails sur ce module sont disponibles notamment sur les sites : http://dev.w3.org/2011/webrtc/editor/webrtc.html et http://tools.ietf.org/wg/rtcweb/charters.

Dans le mode de réalisation décrit ici, l'application système JSApp comprend en outre une pile STACK3 de protocoles de communication adaptés au terminal 2 et au service VS3, et destinés à être utilisés lors d'une session de communication avec la plateforme 3. Cette pile de protocoles STACK3 est un module JavaScript® qui comprend notamment ici :
- les algorithmes de chiffrement devant être mis en œuvre lors des sessions de communication établies dans le cadre du service VS3 (ex. algorithmes de chiffrement symétrique ou asymétrique, fonctions de hachage, etc.) ;
- les codecs utilisés pour coder et décoder les flux média échangés lors de ces sessions (ex. H.261, H.263, MPEG4, H.264 HEVC, etc.) ;
- la pile du protocole de transport utilisé lors de ces sessions ; et
- l'interface utilisateur graphique à utiliser pour déporter l'affichage de l'environnement virtuel VE sur le terminal 2, lorsque le service de virtualisation VS3 est utilisé.

Il convient de noter que les algorithmes de chiffrement, les codecs, l'interface graphique et autres protocoles de communication mis en œuvre lors des sessions de communications établies entre le terminal 2 et les plateformes de virtualisation peuvent varier d'un service de virtualisation à un autre, mais également en fonction des caractéristiques techniques du terminal 2 et de son navigateur 7.

Ces caractéristiques techniques sont comprises, de façon connue en soi, dans la requête d'accès HTTP R émise par le navigateur web 7, et peuvent être aisément extraites de cette requête par la passerelle 6, de sorte à élaborer une pile de protocoles non seulement adaptés au service VS3 mais également au terminal 2 et à son navigateur.

Dans le mode de réalisation décrit ici, on suppose que la passerelle 6 dispose d'une table préétablie décrivant pour différents services et différents types de terminaux, les configurations pouvant être envisagées pour la pile de protocoles fournie dans l'application système JSAPP. La pile de protocoles en elle-même (c'est-à-dire le module JavaScript®) incluse dans l'application système JSAPP est ensuite construite à partir de ces configurations en fonction des caractéristiques du terminal et de son navigateur, et du service requis par l'utilisateur.

Cette table préétablie est par exemple stockée dans la mémoire non volatile 6D de la passerelle 6. L'établissement d'une telle table ne présente aucune difficulté pour l'homme du métier et ne sera pas décrit davantage ici.

Bien entendu, d'autres protocoles de communication peuvent être spécifiés en variante dans la pile de protocoles STACK3. Ces protocoles peuvent être sélectionnés en fonction des caractéristiques du terminal 2 et/ou de son navigateur 7 et/ou du service VS3, ou au contraire est indépendants du terminal, de son navigateur et du service VS3.

Dans le mode de réalisation décrit ici, afin d'établir un environnement virtuel VE complet pour l'utilisateur U, la passerelle 6 génère également un module de connexion CX-MOD4 à la plateforme 4 pour le service VS4, ainsi qu'un module de connexion CX-MOD5 à la plateforme 5 pour le service VS5 et les intègre à l'application système JSApp. Ces modules de connexion sont générés de façon similaire au module de connexion CX-MOD3 et sont aptes respectivement à permettre au terminal 2 de négocier l'établissement et le maintien d'une session de communication avec la plateforme 4 pour accéder au service VS4 et/ou avec la plateforme 5 pour accéder au service VS5, si l'utilisateur U le souhaite.

Par ailleurs, la passerelle 6 intégre ici également dans l'application JSApp, une pile STACK4 de protocoles de communication adaptés au terminal 2 (et à son navigateur 7) et au service VS4, et une pile STACK5 de protocoles de communication adaptés au terminal 2 (et à son navigateur 7) et au service VS5. Ces piles de protocoles sont déterminées par la passerelle 6 de façon similaire à la pile de protocole STACK3.

En variante, l'application JSApp générée par la passerelle 6 ne contient que le module de connexion CX-MOD6 et la pile de protocoles STACK3 relatives au service VS3.

L'application JSApp ainsi générée est transmise en réponse à la requête d'accès R au navigateur 7 (étape E110 de la figure 5), dans une requête HTTP.

Cette application JSApp est reçue par le navigateur 7, et exécutée par celui-ci par le biais du module WWS (étape E120 de la figure 5).

Cette exécution résulte en l'installation dans le navigateur 7 des modules de connexion CX-MOD3, CX-MOD4 et CX-MOD5 et des piles de protocoles de communication STACK3, STACK4 et STACK5 contenus dans l'application JSApp.

Par ailleurs, suite à cette installation, le navigateur 7 initie par l'intermédiaire du module WWS, en utilisant le module de connexion CX-MOD3, une négociation avec la plateforme 3 en vue d'établir et de maintenir une session de communication avec celle-ci pour accéder au service de virtualisation VS3 (étape E130 de la figure 5). Cette négociation suit le schéma classique d'une négociation de session multimédia entre deux entités d'un réseau (synchronisation entre les entités, établissement d'une session d'administration et initiation d'une session de transmission, etc.), et ne présente aucune difficulté en soi pour l'homme du métier. Elle consiste notamment en la mise en œuvre de mécanismes d'authentification (spécifiés dans le module de connexion CX-MOD3), et en l'échange d'informations entre le terminal 2 et la plateforme 3 permettant de négocier l'établissement et la maintien d'une session de communication entre le terminal 2 (ou plus précisément son navigateur 7) et la plateforme 3. Le terminal 2 utilise à cet effet le protocole d'initiation de session identifié dans le module de connexion CX-MOD3.

Si la négociation est positive, une session de communication SESS3 est alors établie avec la plateforme 3 (étape E140 de la figure 5), et l'utilisateur U accède ainsi au service de virtualisation 3 par l'intermédiaire de cette session. Les échanges entre le navigateur 7 et la plateforme 3 s'appuient, lors de la session de communication SESS3, sur les protocoles de communication spécifiés dans la pile STACK3.

Des sessions de communication SESS4 et SESS5 peuvent être négociées et établies de façon similaire entre le navigateur 7 et les plateformes 4 et 5 (étapes E150-E180 de la figure 5), en s'appuyant sur les modules de connexion CX-MOD4 et CX-MOD5 et sur les piles de protocoles STACK4 et STACK5 respectivement.

En variante, les sessions SESS4 et SESS5 ne sont établies que lorsque l'utilisateur émet spécifiquement une requête d'accès aux services VS4 et VS5 (via par exemple la sélection de ces services dans l'application LAUNCH installée sur le terminal 2 et permettant d'initier l'environnement virtuel VE), ces requêtes étant traitées de façon similaire à la requête R par la passerelle 6 (autrement dit, selon un procédé de traitement conforme à l'invention).

Conformément à l'invention, les sessions de communication SESS3, SESS4 et SESS5 établies en support de l'environnement virtuel VE (étape F20 de la figure 6) sont gérées et maintenues par le module de maintien WWS du navigateur 7 du terminal 2 (étape F30 de la figure 6).

Plus généralement, le module de maintien WWS du navigateur 7 du terminal 2 est chargé du maintien de l'environnement informatique virtuel VE, et doit notamment à cet effet s'assurer de la compatibilité entre elles des sessions de communication SESS3, SESS4 et SESS5 établies avec les différentes plateformes de virtualisation 3, 4 et 5, ainsi que de la disponibilité de l'environnement virtuel VE pour l'utilisateur. Par disponibilité, on entend ici le fonctionnement et l'accessibilité de l'environnement virtuel VE. Il s'agit donc notamment ici de s'assurer de la bonne synchronisation du déport de l'affichage de l'environnement virtuel résultant des sessions SESS3, SESS4 et SESS5 avec les plateformes sur l'écran du terminal 2.

Il est connu de l'état de la technique d'assurer le maintien d'un environnement virtuel dans lequel une seule session de communication est établie avec une plateforme de virtualisation (ex. VDI, SBC, ou basée sur une interface web). Ce maintien est généralement assuré à l'aide d'une machine à états définissant les différents états de la session et les transitions d'un état à un autre en fonction des différents événements. Le document RFC3261 et le document intitulé « Javascript Session Establishment Protocol, draft-ietf-rtcweb-jsep-00» édités par l'IETF décrivent de telles machines à états.

Conformément à l'invention, plusieurs sessions de communication peuvent être établies en parallèle avec plusieurs plateformes de virtualisation. Pour assurer le maintien de l'environnement virtuel VE résultant de ces sessions, le module de maintien WWS du navigateur 7 du terminal 2 utilise ici deux niveaux de machines à états, et plus spécifiquement :
- une machine à états ST-MG dite globale définissant différents états possibles pour l'environnement informatique virtuel VE, tels que par exemple, initialisation de l'environnement virtuel, synchronisation avec une plateforme (ou de façon équivalente, négociation d'une session d'administration avec cette plateforme), service en cours d'exécution, etc., et les transitions permettant de passer d'un état à un autre en fonction d'événements prédéterminés ; et
- pour chaque plateforme de virtualisation avec laquelle une session de communication est établie dans l'environnement informatique virtuel VE, une machine à états définissant différents états possibles pour cette session de communication, tels que par exemple initiation de la session, session close, réinitialisation de la session, session de communication en cours (i.e. invocation du service), etc., ainsi que les transitions permettant de passer d'un état à un autre en fonction d'événements prédéterminés. Autrement dit, dans l'exemple envisagé à la figure 1, le module de maintien WWS du navigateur 7 du terminal considère trois machines à états distinctes, ST-M3, ST-M4 et ST-M5 dédiées respectivement à la surveillance et au contrôle de la session SESS3, de la session SESS4 et de la session SESS5. De cette sorte, si une connexion avec l'une des plateformes 3, 4 ou 5 est perturbée, seule la session de communication en cours avec cette plateforme sera perturbée. L'environnement WWS et ses sessions avec les autres plateformes ne seront pas impactés.

De telles machines à états sont connues en soi et ne seront pas décrites davantage ici. Grâce à ce double niveau de machines à états, on s'assure que si une connexion à une plateforme de virtualisation est perturbée, seul le service offert par cette plateforme est interrompu. L'environnement virtuel VE est maintenu et s'appuie sur les autres sessions de communication en cours.

## Revendications

1. Procédé de traitement de requêtes d'accès à des services de virtualisation informatique, mis en œuvre par une passerelle de virtualisation (6), cette passerelle maintenant une base de données (9) contenant, pour chaque plateforme (3, 4, 5) d'une pluralité de plateformes de virtualisation, au moins un service de virtualisation informatique (VS3, VS4, VS5) offert par cette plateforme et des informations de connexion permettant d'accéder audit au moins un service par l'intermédiaire de cette plateforme,
ce procédé de traitement comprenant :
- une étape (E80) de réception d'une requête d'accès (R) d'un terminal (2) à un service de virtualisation informatique (VS3) offert par une plateforme de virtualisation (3), cette requête d'accès ayant été émise par un navigateur web (7) installé sur le terminal ;
- si le service (VS3) requis par le terminal (2) est contenu dans la base (9) maintenue par la passerelle (E90), une étape de génération (E100), à partir des informations de connexion associées dans la base à ce service, d'une application système (JSApp) adaptée au service (VS3), cette application système comprenant un module (CX-MOD3) de connexion à la plateforme de virtualisation (3) offrant ledit service, apte à permettre au terminal (2) de négocier l'établissement et le maintien d'une session (SESS3) de communication avec ladite plateforme (3) ; et
- une étape d'envoi (E110) de l'application système générée au navigateur web (7) installé sur le terminal.

2. Procédé selon la revendication 1 dans lequel l'application système (JSApp) générée est une application en langage JavaScript®.

3. Procédé selon la revendication 1 ou 2 dans lequel l'application système comprend en outre un module de connexion (CX-MOD4, CX-MOD5) à chacune des autres plateformes (4,5) de la pluralité de plateformes de virtualisation apte à permettre au terminal (2) de négocier l'établissement et le maintien d'une session de communication (SESS4, SESS5) avec cette plateforme.

4. Procédé selon l'une quelconque des revendications 1 à 3 dans lequel l'application système générée (JSApp) comprend en outre une pile (STACK3) de protocoles de communication adaptés au terminal (2) et/ou au service (VS3), et destinés à être mis en œuvre lors d'une session de communication (SESS3) entre le terminal (2) et la plateforme de virtualisation (3).

5. Procédé selon l'une quelconque des revendications 1 à 4 comprenant en outre :
- au moins une étape (E10, E30, E50) de réception d'un message en provenance d'une plateforme de virtualisation (3,4,5) identifiant au moins un service de virtualisation informatique (VS3,VS4,VS5) offert par cette plateforme et contenant des informations de connexion pour accéder audit au moins un service par l'intermédiaire de cette plateforme de virtualisation ; et
- une étape (E20, E40, E60) de mise à jour de la base (9) avec le service identifié et les informations de connexion contenues dans le message.

6. Procédé d'initiation par un navigateur web (7) installé sur un terminal (2) d'un accès par ce terminal à un service de virtualisation informatique (VS3) offert par une plateforme de virtualisation (3), ledit procédé comprenant :
- une étape d'envoi (E80) par le navigateur web (7), à une passerelle de virtualisation (6), d'une requête d'accès (R) audit service de virtualisation informatique ;
- une étape de réception (E110) par le navigateur web, en provenance de la passerelle de virtualisation, d'une application système (JSApp) adaptée au service de virtualisation informatique requis (VD3), et comprenant un module de connexion (CX-MOD3) à la plateforme de virtualisation (3) offrant ledit service, apte à permettre au terminal de négocier l'établissement et le maintien d'une session de communication (SESS3) avec cette plateforme ; et
- une étape d'exécution (E120) par le navigateur web, de l'application système reçue, comprenant une négociation (E130) de l'établissement et du maintien d'une session de communication (SESS3) avec la plateforme de virtualisation afin d'accéder au service de virtualisation (VS3) à l'aide dudit module de connexion (CX-MOD3).

7. Procédé de gestion d'un environnement informatique virtuel (VE), ledit procédé étant destiné à être mis en œuvre par un navigateur web installé sur un terminal (2) et comprenant :
- une étape d'établissement (F10, F20, E140, E160, E170) par le navigateur web, dans cet environnement informatique virtuel, d'au moins une session (SESS3, SESS4, SESS5) de communication avec au moins une plateforme de virtualisation (3,4,5) offrant un service de virtualisation informatique (VS3,VS4,VS5), au moins une dite session de communication étant établie suite à la mise en œuvre par le terminal d'un procédé d'initiation conforme à la revendication 6 ; et
- une étape de maintien (F30) de l'environnement informatique virtuel par le navigateur web (7) utilisant :
∘ une machine à états (ST-MG) définissant différents états possibles pour l'environnement informatique virtuel ; et
∘ pour chaque plateforme de virtualisation (3,4,5) avec laquelle une session de communication est établie dans l'environnement informatique virtuel lors de l'étape d'établissement, une machine à états (ST-M3, ST-M4, ST-M5) définissant différents états possibles pour cette session de communication (SESS3, SESS4, SESS5).

8. Programme d'ordinateur comportant des instructions pour l'exécution des étapes du procédé de traitement selon l'une quelconque des revendications 1 à 5 lorsque ledit programme est exécuté par un ordinateur.

9. Programme d'ordinateur comportant des instructions pour l'exécution des étapes du procédé d'initiation selon la revendication 6 ou d'un procédé de gestion selon la revendication 7 lorsque ledit programme est exécuté par un ordinateur.

10. Passerelle de virtualisation (6) comprenant :
- une base de données (9) contenant, pour chaque plateforme (3,4,5) d'une pluralité de plateformes de virtualisation, au moins un service de virtualisation informatique (VS3,VS4,VS5) offert par cette plateforme et des informations de connexion permettant d'accéder audit au moins un service par l'intermédiaire de ladite plateforme ;
- un module de réception d'une requête d'accès (R) d'un terminal à un service de virtualisation informatique (VS3) offert par une plateforme de virtualisation (3), cette requête ayant été émise par un navigateur web (7) installé sur le terminal ;
- un module de vérification, activé sur réception de la requête d'accès, apte à vérifier si le service de virtualisation (VS3) requis par le terminal est contenu dans la base de données ;
- un module de génération, activé le cas échéant, d'une application système (JSApp) adaptée au service de virtualisation requis, à partir des informations de connexion associées dans la base audit service, cette application système comprenant un module de connexion (CX-MOD3) à la plateforme de virtualisation offrant ledit service, apte à permettre au terminal de négocier l'établissement et le maintien d'une session de communication (SESS3) avec ladite plateforme ; et
- un module d'envoi de l'application système générée par le module de génération au navigateur web (7) installé sur le terminal.

11. Navigateur web (7) destiné à être installé sur un terminal (2) et comprenant :
- un module d'envoi apte à envoyer à une passerelle de virtualisation (6) une requête d'accès (R) à un service de virtualisation informatique (VS3) offert par une plateforme de virtualisation ;
- un module de réception apte à recevoir de la passerelle de virtualisation, une application système (JSApp) adaptée au service de virtualisation informatique requis, et comprenant un module de connexion (CX-MOD) à la plateforme de virtualisation offrant ledit service, apte à permettre au terminal de négocier l'établissement et le maintien d'une session de communication avec ladite plateforme ;
- un module d'exécution apte à exécuter l'application système reçue et à négocier l'établissement et le maintien d'une session de communication (SESS3) avec la plateforme afin d'accéder au service de virtualisation en utilisant le module de connexion contenu dans l'application système.

12. Navigateur web (7) selon la revendication 11, comprenant en outre un module de gestion (WWS) d'un environnement informatique virtuel (VE) dans lequel au moins une session de communication (SESS3, SESS4, SESS5) avec au moins une plateforme de virtualisation offrant un service de virtualisation informatique est établie suite à une négociation avec cette plateforme mise en œuvre par le module d'exécution, ce module de gestion (WWS) étant apte à utiliser, pour maintenir l'environnement informatique virtuel :
- une machine à états (ST-MG) définissant différents états possibles pour l'environnement informatique virtuel ; et
- pour chaque plateforme de virtualisation (3,4,5) avec laquelle une session de communication est établie dans l'environnement informatique virtuel lors de l'étape d'établissement, une machine à états (ST-M3, ST-M4, ST-M5) définissant différents états possibles pour cette session de communication.

13. Terminal (2) sur lequel est installé un navigateur web selon la revendication 11 ou 12.

14. Système informatique (1) comprenant :
- une pluralité de plateformes de virtualisation (3,4,5) offrant des services de virtualisation informatique (VS3, VS4, VS5) ;
- un terminal (2) selon la revendication 13, apte à envoyer une requête d'accès (R) à un dit service de virtualisation informatique (VS3) offert par une dite plateforme de virtualisation (3) ; et
- une passerelle de virtualisation (6) selon la revendication 10, apte à traiter cette requête d'accès.

15. Système (1) selon la revendication 14 dans lequel la pluralité de plateformes de virtualisation comprend au moins deux plateformes parmi :
- une plateforme (3) de virtualisation de type VDI ;
- une plateforme (4) de virtualisation d'applications centralisée de type SBC ; et
- une plateforme (5) de virtualisation d'applications et/ou de systèmes d'exploitation utilisant une interface web.

16. Système (1) selon la revendication 14 ou 15 dans lequel au moins une dite plateforme de virtualisation est apte à envoyer des messages asynchrones à la passerelle de virtualisation l'informant des services de virtualisation informatique qu'elle offre et contenant des informations de connexion associées à ces services de virtualisation.

## Patentansprüche

1. Verfahren zum Verarbeiten von Zugriffsanforderungen für Computervirtualisierungsdienste, durchgeführt von einem Virtualisierungs-Gateway (6), wobei dieses Gateway eine Datenbank (9) unterhält, die für jede Plattform (3, 4, 5) eine Vielzahl von Virtualisierungsplattformen, mindestens einen von dieser Plattform angebotenen Computervirtualisierungsdienst (VS3, VS4, VS5) und Verbindungsinformationen für den Zugriff auf den mindestens einen Dienst über diese Plattform enthält,
wobei dieses Verarbeitungsverfahren Folgendes aufweist:
- einen Schritt zum Empfangen (E80) einer Zugriffsanforderung (R) eines Endgeräts (2) für einen von einer Virtualisierungsplattform (3) angebotenen Computervirtualisierungsdienst (VS3), wobei diese Zugriffsanforderung von einem auf dem Endgerät installierten Webbrowser (7) ausgegeben wurde;
- wenn der von dem Endgerät (2) benötigte Dienst (VS3) in der von dem Gateway (E90) unterhaltenen Datenbank (9) enthalten ist, einen Schritt zum Erzeugen (E100) einer an den Dienst (VS3) angepassten Systemanwendung (JSApp) über die in der Datenbank mit diesem Dienst verknüpften Verbindungsinformationen, wobei diese Systemanwendung ein Modul (CX-MOD3) zur Verbindung mit der diesen Dienst anbietenden Virtualisierungsplattform (3) aufweist, das geeignet ist, dem Endgerät (2) zu ermöglichen, das Einrichten und Beibehalten einer Kommunikationssitzung (SESS3) mit der Plattform (3) zu verhandeln; und
- einen Schritt zum Senden (E110) der erzeugten Systemanwendung an den auf dem Endgerät installierten Webbrowser (7).

2. Verfahren nach Anspruch 1, wobei die erzeugte Systemanwendung (JSApp) eine Anwendung in der Sprache JavaScript® ist.

3. Verfahren nach Anspruch 1 oder 2, wobei die Systemanwendung darüber hinaus ein Verbindungsmodul (CX-MOD4, CX-MOD5) zu jeder der anderen Plattformen (4, 5) der Vielzahl von Virtualisierungsplattformen aufweist, das geeignet ist, dem Endgerät (2) zu ermöglichen, das Einrichten und Beibehalten einer Kommunikationssitzung (SESS4, SESS5) mit dieser Plattform zu verhandeln.

4. Verfahren nach einem der Ansprüche 1 bis 3, wobei die erzeugte Systemanwendung (JSApp) darüber hinaus einen Stapel (STACK3) von Kommunikationsprotokollen aufweist, die an das Endgerät (2) und/oder den Dienst (VS3) angepasst sind und während einer Kommunikationssitzung (SESS3) zwischen dem Endgerät (2) und der Virtualisierungsplattform (3) durchgeführt werden sollen.

5. Verfahren nach einem der Ansprüche 1 bis 4, das darüber hinaus Folgendes aufweist:
- mindestens einen Schritt zum Empfangen (E10, E30, E50) einer Nachricht von einer Virtualisierungsplattform (3, 4, 5), die mindestens einen Computervirtualisierungsdienst (VS3, VS4, VS5) identifiziert, der von dieser Plattform angeboten wird und Verbindungsinformationen für den Zugriff auf den mindestens einen Dienst über diese Virtualisierungsplattform enthält; und
- einen Schritt zum Aktualisieren (E20, E40, E60) der Datenbank (9) mit dem identifizierten Dienst und den in der Nachricht enthaltenen Verbindungsinformationen.

6. Verfahren zum Initiieren eines Zugriffs auf einen von einer Virtualisierungsplattform (3) angebotenen Computervirtualisierungsdienst (VD3) durch einen auf einem Endgerät (2) installierten Webbrowser (7), wobei das Verfahren Folgendes aufweist:
- einen Schritt zum Senden (E80) einer Zugriffsanforderung (R) für den Computervirtualisierungsdienst durch den Webbrowser (7) an ein Virtualisierungs-Gateway (6);
- einen Schritt zum Empfangen (E110) einer an den benötigten Dienst (VS3) angepassten Systemanwendung (JSApp) vom Virtualisierungs-Gateway durch den Webbrowser, die ein Modul (CX-MOD3) zur Verbindung mit der diesen Dienst anbietenden Virtualisierungsplattform (3) aufweist, das geeignet ist, dem Endgerät zu ermöglichen, das Einrichten und Beibehalten einer Kommunikationssitzung (SESS3) mit dieser Plattform zu verhandeln; und
- einen Schritt zum Ausführen (E120) der empfangenen Systemanwendung durch den Webbrowser, der eine Aushandlung (E130) zum Einrichten und Beibehalten einer Kommunikationssitzung (SESS3) mit der Virtualisierungsplattform aufweist, um mithilfe des Verbindungsmoduls (CX-MOD3) auf den Virtualisierungsdienst (VS3) zuzugreifen.

7. Verfahren zum Verwalten einer virtuellen Computerumgebung (VE), wobei das Verfahren dazu bestimmt ist, von einem auf einem Endgerät (2) installierten Webbrowser durchgeführt zu werden, und Folgendes aufweist:
- einen Schritt zum Einrichten (F10, F20, E140, E160, E170) von mindestens einer Kommunikationssitzung (SESS3, SESS4, SESS5) mit mindestens einer Virtualisierungsplattform (3, 4, 5), die einen Computervirtualisierungsdienst (VS3, VS4, VS5) anbietet, durch den Webbrowser in dieser virtuellen Computerumgebung, wobei mindestens eine Kommunikationssitzung nach der Durchführung eines Initiierungsverfahrens nach Anspruch 6 durch das Endgerät eingerichtet wird; und
- einen Schritt zum Beibehalten (F30) der virtuellen Computerumgebung durch den Webbrowser (7) unter Verwendung von:
∘ einer Zustandsmaschine (ST-MG), die verschiedene mögliche Zustände für die virtuelle Computerumgebung definiert; und
∘ für jede Virtualisierungsplattform (3, 4, 5), mit der eine Kommunikationssitzung in der virtuellen Computerumgebung während des Einrichtungsschritts eingerichtet wird, einer Zustandsmaschine (ST-M3, ST-M4, ST -M5), die verschiedene mögliche Zustände für diese Kommunikationssitzung (SESS3, SESS4, SESS5) definiert.

8. Computerprogramm mit Anweisungen zum Ausführen der Schritte des Verarbeitungsverfahrens nach einem der Ansprüche 1 bis 5, wenn das Programm von einem Computer ausgeführt wird.

9. Computerprogramm mit Anweisungen zum Ausführen der Schritte des Initiierungsverfahrens nach Anspruch 6 oder eines der Verwaltungsverfahren nach Anspruch 7, wenn das Programm von einem Computer ausgeführt wird.

10. Virtualisierungs-Gateway (6), das Folgendes aufweist:
- eine Datenbank (9), die für jede Plattform (3, 4, 5) eine Vielzahl von Virtualisierungsplattformen, mindestens einen von dieser Plattform angebotenen Computervirtualisierungsdienst (VS3, VS4, VS5) und Verbindungsinformationen für den Zugriff auf den mindestens einen Dienst über die Plattform enthält;
- ein Modul zum Empfangen einer Zugriffsanforderung (R) eines Endgeräts für einen von einer Virtualisierungsplattform (3) angebotenen Computervirtualisierungsdienst (VS3), wobei diese Anforderung von einen auf dem Endgerät installierten Webbrowser (7) ausgegeben wurde;
- ein Überprüfungsmodul, das nach Empfang der Zugriffsanforderung aktiviert wird und prüfen kann, ob der vom Endgerät benötigte Virtualisierungsdienst (VS3) in der Datenbank enthalten ist;
- ein gegebenenfalls aktiviertes Modul zum Erzeugen einer an den benötigten Virtualisierungsdienst angepassten Systemanwendung (JSApp) über die in der Datenbank mit dem Dienst verknüpften Verbindungsinformationen, wobei diese Systemanwendung ein Modul (CX-MOD3) zur Verbindung mit der den Dienst anbietenden Virtualisierungsplattform aufweist, das geeignet ist, dem Endgerät zu ermöglichen, das Einrichten und Beibehalten einer Kommunikationssitzung (SESS3) mit der Plattform zu verhandeln; und
- ein Modul zum Senden der vom Erzeugungsmodul erzeugten Systemanwendung an den auf dem Endgerät installierten Webbrowser (7).

11. Webbrowser (7) der auf einem Endgerät (2) installiert werden soll und Folgendes aufweist:
- ein Sendemodul, das geeignet ist zum Senden einer Zugriffsanforderung (R) für einen von einer Virtualisierungsplattform angebotenen Computervirtualisierungsdienst (VS3) an ein Virtualisierungs-Gateway (6) ;
- ein Empfangsmodul, das geeignet ist zum Empfangen einer an den benötigten Dienst angepassten Systemanwendung (JSApp) vom Virtualisierungs-Gateway und ein Modul (CX-MOD) zur Verbindung mit der diesen Dienst anbietenden Virtualisierungsplattform aufweist, das geeignet ist, dem Endgerät zu ermöglichen, das Einrichten und Beibehalten einer Kommunikationssitzung mit der Plattform zu verhandeln;
- ein Ausführungsmodul, das geeignet ist zum Ausführen der empfangenen Systemanwendung und zum Verhandeln des Einrichtens und Beibehaltens einer Kommunikationssitzung (SESS3) mit der Plattform, um mithilfe des in der Systemanwendung enthaltenen Verbindungsmoduls auf den Virtualisierungsdienst zuzugreifen.

12. Webbrowser (7) nach Anspruch 11, der darüber hinaus ein Modul zum Verwalten (WWS) einer virtuellen Computerumgebung (VE) aufweist, in der mindestens eine Kommunikationssitzung (SESS3, SESS4, SESS5) mit mindestens einer einen Computervirtualisierungsdienst anbietenden Virtualisierungsplattform nach einer von dem Ausführungsmodul durchgeführten Verhandlung mit dieser Plattform eingerichtet wird, wobei dieses Verwaltungsmodul (WWS) geeignet ist, zum Beibehalten der virtuellen Computerumgebung Folgendes zu verwenden:
- eine Zustandsmaschine (ST-MG), die verschiedene mögliche Zustände für die virtuelle Computerumgebung definiert; und
- für jede Virtualisierungsplattform (3, 4, 5), mit der eine Kommunikationssitzung in der virtuellen Computerumgebung während des Einrichtungsschritts eingerichtet wird, eine Zustandsmaschine (ST-M3, ST-M4, ST -M5), die verschiedene mögliche Zustände für diese Kommunikationssitzung definiert.

13. Endgerät (2), auf dem ein Webbrowser nach Anspruch 11 oder 12 installiert ist.

14. Computersystem (1), das Folgendes aufweist:
- eine Vielzahl von Virtualisierungsplattformen (3, 4, 5), die Computervirtualisierungsdienste (VS3, VS4, VS5) anbieten;
- ein Endgerät (2) nach Anspruch 13, das geeignet ist, eine Zugriffsanforderung (R) für einen von einer Virtualisierungsplattform (3) angebotenen Computervirtualisierungsdienst (VS3) zu senden; und
- ein Virtualisierungs-Gateway (6) nach Anspruch 10, das geeignet ist, diese Zugriffsanforderung zu verarbeiten.

15. System (1) nach Anspruch 14, in dem die Vielzahl von Virtualisierungsplattformen mindestens zwei der folgenden Plattformen aufweist:
- eine Virtualisierungsplattform (3) des Typs VDI;
- eine zentralisierte Anwendungs-Virtualisierungsplattform (4) des Typs SBC; und
- eine Anwendungs-Virtualisierungsplattform (5) und/oder Betriebssysteme, die eine Webschnittstelle verwenden.

16. System (1) nach Anspruch 14 oder 15, in dem mindestens eine der Virtualisierungsplattformen geeignet ist, asynchrone Nachrichten an das Virtualisierungs-Gateway zu senden, die es über die von ihr angebotenen Computervirtualisierungsdienste informieren und mit diesen Virtualisierungsdiensten verknüpfte Verbindungsinformationen enthalten.

## Claims

1. Method for processing requests for access to computer virtualization services, implemented by a virtualization gateway (6), this gateway maintaining a database (9) containing, for each platform (3, 4, 5) of a plurality of virtualization platforms, at least one computer virtualization service (VS3, VS4, VS5) offered by this platform and connection information allowing access to said at least one service via this platform, this processing method comprising:
- a step (E80) of reception of an access request (R) from a terminal (2) to a computer virtualization service (VS3) offered by a virtualization platform (3), this access request having been transmitted by a web browser (7) installed on the terminal;
- if the service (VS3) requested by the terminal (2) is contained in the base (9) maintained by the gateway (E90), a step of generation (E100), from the connection information associated in the base with this service, of a system application (JSApp) adapted to the service (VS3), this system application comprising a module (CX-MOD3) for connection to the virtualization platform (3) offering said service, capable of allowing the terminal (2) to negotiate the setting up and the maintaining of a communication session (SESS3) with said platform (3); and
- a step of sending (E110) of the generated system application to the web browser (7) installed on the terminal.

2. Method according to Claim 1, in which the generated system application (JSApp) is an application in JavaScript® language.

3. Method according to Claim 1 or 2, in which the system application further comprises a connection module (CX-MOD4, CX-MOD5) for connecting to each of the other platforms (4, 5) of the plurality of virtualization platforms capable of allowing the terminal (2) to negotiate the setting up and the maintaining of a communication session (SESS4, SESS5) with this platform.

4. Method according to any one of Claims 1 to 3, in which the generated system application (JSApp) further comprises a stack (STACK3) of communication protocols adapted to the terminal (2) and/or to the service (VS3), and intended to be implemented in a communication session (SESS3) between the terminal (2) and the virtualization platform (3).

5. Method according to any one of Claims 1 to 4, further comprising:
- at least one step (E10, E30, E50) of reception of a message from a virtualization platform (3, 4, 5) identifying at least one computer virtualization service (VS3, VS4, VS5) offered by this platform and containing connection information for accessing said at least one service via this virtualization platform; and
- a step (E20, E40, E60) of updating of the base (9) with the identified service and the connection information contained in the message.

6. Method for initiation, by a web browser (7) installed on a terminal (2), of an access by this terminal to a computer virtualization service (VS3) offered by a virtualization platform (3), said method comprising:
- a step of sending (E80) by the web browser (7), to a virtualization gateway (6), of a request for access (R) to said computer virtualization service;
- a step of reception (E110) by the web browser, from the virtualization gateway, of a system application (JSApp) adapted to the computer virtualization service requested (VD3), and comprising a connection module (CX-MOD3) for connecting to the virtualization platform (3) offering said service, capable of allowing the terminal to negotiate the setting up and the maintaining of a communication session (SESS3) with this platform; and
- a step of execution (E120), by the web browser, of the received system application, comprising a negotiation (E130) of the setting up and of the maintaining of a communication session (SESS3) with the virtualization platform in order to access the virtualization service (VS3) using said connection module (CX-MOD3).

7. Method for managing a virtual computer environment (VE), said method being intended to be implemented by a web browser installed on a terminal (2) and comprising:
- a step of setting up (F10, F20, E140, E160, E170), by the web browser, in this virtual computer environment, of at least one communication session (SESS3, SESS4, SESS5) with at least one virtualization platform (3, 4, 5) offering a computer virtualization service (VS3, VS4, VS5), at least one said communication session being set up following the implementation by the terminal of an initiation method according to Claim 6; and
- a step of maintaining (F30) of the virtual computer environment by the web browser (7) using:
∘ a state machine (ST-MG) defining different possible states for the virtual computer environment; and
∘ for each virtualization platform (3, 4, 5) with which a communication session is set up in the virtual computer environment in the setting-up step, a state machine (ST-M3, ST-M4, ST-M5) defining different possible states for this communication session (SESS3, SESS4, SESS5).

8. Computer programme comprising instructions for the execution of the steps of the processing method according to any one of Claims 1 to 5 when said programme is run by a computer.

9. Computer programme comprising instructions for the execution of the steps of the initiation method according to Claim 6 or of a management method according to Claim 7 when said programme is run by a computer.

10. Virtualization gateway (6) comprising:
- a database (9) containing, for each platform (3, 4, 5) of a plurality of virtualization platforms, at least one computer virtualization service (VS3, VS4, VS5) offered by this platform and connection information allowing access to said at least one service via said platform;
- a module for receiving an access request (R) from a terminal requesting access to a computer virtualization service (VS3) offered by a virtualization platform (3), this request having been transmitted by a web browser (7) installed on the terminal;
- a checking module, activated on reception of the access request, capable of checking whether the virtualization service (VS3) requested by the terminal is contained in the database;
- a generation module, activated if appropriate, for generating a system application (JSApp) adapted to the requested virtualization service, from connection information associated in the base with said service, this system application containing a connection module (CX-MOD3) for connecting to the virtualization platform offering said service, capable of allowing the terminal to negotiate the setting up and the maintaining of a communication session (SESS3) with said platform; and
- a module for sending the system application generated by the generation module to the web browser (7) installed on the terminal.

11. Web browser (7) intended to be installed on a terminal (2) and comprising:
- a sending module capable of sending to a virtualization gateway (6) an access request (R) requesting access to a computer virtualization service (VS3) offered by a virtualization platform;
- a reception module capable of receiving, from the virtualization gateway, a system application (JSApp) adapted to the requested computer virtualization service, and comprising a connection module (CX-MOD) for connecting to the virtualization platform offering said service, capable of allowing the terminal to negotiate the setting up and the maintaining of a communication session with said platform;
- an execution module capable of executing the received system application and of negotiating the setting up and the maintaining of a communication session (SESS3) with the platform in order to access the virtualization service by using the connection module contained in the system application.

12. Web browser (7) according to Claim 11, further comprising a management module (WWS) for managing a virtual computer environment (VE) in which at least one communication session (SESS3, SESS4, SESS5) with at least one virtualization platform offering a computer virtualization service is set up following a negotiation with this platform implemented by the execution module, this management module (WWS) being capable of using, to maintain the virtual computer environment:
- a state machine (ST-MG) defining different possible states for the virtual computer environment; and
- for each virtualization platform (3, 4, 5) with which a communication session is set up in the virtual computer environment in the setting-up step, a state machine (ST-M3, ST-M4, ST-M5) defining different possible states for this communication session.

13. Terminal (2) on which is installed a web browser according to Claim 11 or 12.

14. Computer system (1) comprising:
- a plurality of virtualization platforms (3, 4, 5) offering computer virtualization services (VS3, VS4, VS5);
- a terminal (2) according to Claim 13, capable of sending of an access request (R) to one said computer virtualization service (VS3) offered by one said virtualization platform (3); and
- a virtualization gateway (6) according to Claim 10, capable of processing this access request.

15. System (1) according to Claim 14, in which the plurality of virtualization platforms comprises at least two platforms out of:
- a virtualization platform (3) of VDI type;
- a centralized application virtualization platform (4) of SBC type; and
- an application and/or operating system virtualization platform (5) using a web interface.

16. System (1) according to Claim 14 or 15, in which at least one said virtualization platform is capable of sending asynchronous messages to the virtualization gateway informing it of the computer virtualization services that it offers and containing connection information associated with these virtualization services.
